# EUROPÄISCHE PATENTSCHRIFT

(11) **EP 0 892 952 B1**
(45) Veröffentlichungstag und Bekanntmachung des Hinweises auf die Patenterteilung: **17.11.1999**
(21) Anmeldenummer: 97923724.5
(22) Anmeldetag: 07.04.1997
(51) Int. Cl.: G06F 13/364

(54) **KOMMUNIKATIONSSYSTEM MIT EINER MEISTERSTATION UND MINDESTENS EINER SKLAVENSTATION**
COMMUNICATIONS SYSTEM WITH A MASTER STATION AND AT LEAST ONE SLAVE STATION
SYSTEME DE COMMUNICATIONS AVEC UNE STATION MAITRESSE ET AU MOINS UNE STATION ASSERVIE

(30) Priorität: 10.04.1996 DE 19614238
(43) Veröffentlichungstag der Anmeldung: 27.01.1999
(73) Patentinhaber: SIEMENS AKTIENGESELLSCHAFT, 80333 München (DE)
(72) Erfinder: SOTEK, Karel, D-81669 München (DE); MEHRGARDT, Sönke, D-79232 March (DE); BORN, Christine, D-85521 Ottobrunn (DE); ENDRISS, Heinz, D-82131 Stockdorf (DE); GOSSMANN, Timo, D-80335 München (DE)
(86) Internationale Anmeldenummer: DE9700706
(87) Internationale Veröffentlichungsnummer: WO9738370

(56) Entgegenhaltungen:
- EP-A- 0 221 303
- GB-A- 2 217 561
- US-A- 5 361 005
- US-A- 5 499 242

## Beschreibung

Die Erfindung betrifft ein Kommunikationssystem, das mindestens eine Sklavenstation und eine Meisterstation zu deren Steuerung aufweist. Dabei sind die Sklavenstationen ohne die Meisterstation nicht betriebsfähig.

Ein Kommunikationssystem kann beispielsweise mittels des I²C-(Inter IC-)Busses realisiert werden. An den I²C-Bus sind mehrere Meisterstationen und mehrere Sklavenstationen über Open-Collector-Ausgänge angeschlossen. Die Meisterstationen steuern die Sklavenstationen über ihnen bekannte Adressen, die in den Sklavenstationen fest gespeichert sind.

Es kann vorkommen, daß beim I²C-Bus zwei Meisterstationen gleichzeitig versuchen, auf den Bus zuzugreifen, um Sklavenstationen zu adressieren. Für diesen Fall ist beim I²C-Bus ein sogenannter Arbitrations-Vorgang vorgesehen. Bei diesem geben die konkurrierenden Meisterstationen gleichzeitig bitweise jeweils einen in ihnen gespeicherten, individuellen Identifikationscode über ihre Open-Collector-Ausgänge auf eine vorgeladene Leitung des Busses. Das Potential der Leitung wird auf Masse gezogen, sobald eines der gerade auszugebenden Bits einen High-Pegel aufweist, auch wenn das Bit der anderen Meisterstation einen Low-Pegel hat. Jede Meisterstationen überwacht, ob bei einer Entladung der Leitung das gerade ausgegebene Bit ihres Identifikationscodes einen High-Pegel hat. Ist dies nicht der Fall, schaltet sie sich inaktiv, und es gelingt derjenigen Meisterstation der Bus-Zugriff, deren Identifikationscode mit allen seinen Bits für die aufeinander folgenden Potentialzustände der Leitung bestimmend ist.

In der GB-A 2 217 561 ist ein Host-Computer beschrieben, der Peripherieeinheiten neue Adressen zuweist. Dabei geben die Peripherieeinheiten gleichzeitig in ihnen gespeicherte Identifikationsnummern bitweise aus und führen dabei eine Kollisionserkennung durch. Nur eine der Peripherieeinheiten setzt sich schließlich durch, während sich die übrigen aufgrund der Kollisionserkennung deaktivieren. Anschließend überträgt der Host eine neue Adresse zur zuletzt noch aktiven Peripherieeinheit, die diese Adresse speichert. Über die neue gespeicherte Adresse ist sie anschließend durch den Host adressierbar.

Aufgabe der vorliegenden Erfindung ist es, ein Kommunikationssystem zu schaffen, bei dem eine beliebige Anzahl von Sklavenstationen anschließbar ist, deren Adressen und deren Anzahl im vorhinein der sie steuernden Meisterstation nicht bekannt ist, und bei der die Übertragung einer neuen Adresse vcn der Meisterstation zur jeweiligen Sklavenstation entfällt.

Diese Aufgabe wird durch ein Kommunikationssystem nach Anspruch 1 sowie eine Meisterstation nach Anspruch 2 gelöst.

Während beim I²C-Bus in jeder Meisterstation ein Identifikationscode gespeichert ist, ist erfindungsgemäß vorgesehen, daß ein Identifikationscode in jeder Sklavenstation gespeichert ist. Dieser Identifikationscode ist für jede Sklavenstation unterschiedlich und kann eine Vielzahl von Bits aufweisen.

Während beim I²C-Bus eine Zugriffsberechtigung konkurrierender Meisterstationen auf den Bus durch Ausgabe ihrer Identifikationscodes ermittelt wird, dient ein ähnlicher Vorgang bei der Erfindung der Identifikation einer beliebigen Anzahl unbekannter Sklavenstationen durch eine Meisterstation. Unter Identifikation wird hier das Erkennen angeschlossener Sklavenstationen und die Zuordnung von Adressen zu diesen Sklavenstationen durch die Meisterstation verstanden.

Beim erfindungsgemäßen Kommunikationssystem kann die Meisterstation feststellen, wieviele ihr bislang unbekannte (also keine zugeordnete Adresse aufweisende) Sklavenstationen an das System angeschlossen sind, wobei sie jeder dieser Sklavenstationen eine Adresse zuordnet, über welche sie anschließend adressierbar ist. Dabei ist die Anzahl der an das System angeschlossenen Sklavenstationen unerheblich.

Die Anzahl der Sklavenstationen S wird ermittelt, indem die erfindungsgemaße Identifikation solange durchgeführt wird, bis sich bei einem erneuten Identifikationszyklus (beginnend mit der Ausgabe des ersten Bits der Identifikationscodes) keine der Sklavenstationen mehr durch Ausgabe ihres Identifikationscodes als bisher nicht identifiziert meldet. Dies ist der Fall, wenn allen an das Kommunikationssystem angeschlossenen Sklavenstationen eine Adresse zugeordnet worden ist und sie anschließend deaktiviert worden sind. Tritt dieser Fall ein, beendet die Meisterstation den Identifikationsvorgang.

Die Erfindung wird im folgenden anhand der Figuren erläutert. Es zeigen:
- Figuren 1 und 4: zwei Ausführungsbeispiele des erfindungsgemäßen Kommunikationssystems,
- Figur 2: ein Ausführungsbeispiel der Meisterstation aus Figur 1,
- Figur 3: ein Ausführungsbeispiel der Sklavenstationen aus Figur 1,
- Figur 5: ein Ausführungsbeispiel der Sklavenstationen aus Figur 4.
- Figuren 6 und 7: ein Betriebsverfahren für die Kommunikationssysteme aus Figur 1 und 4.

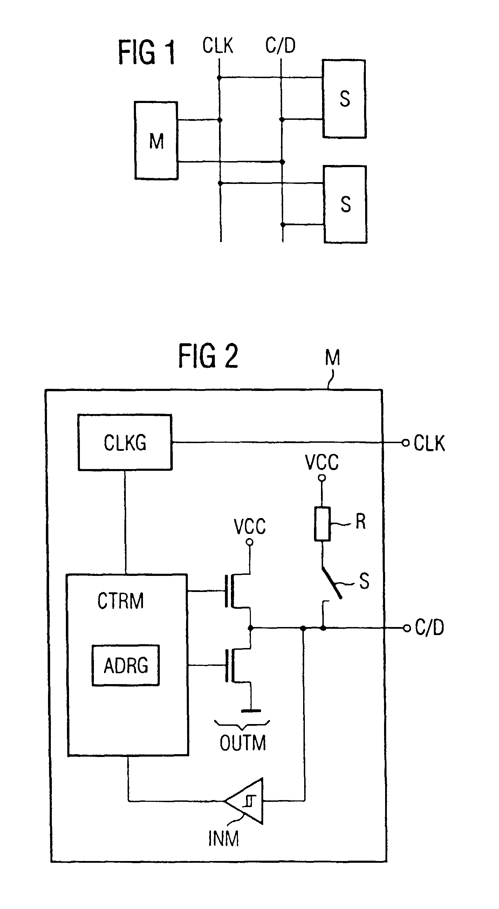

Figur 1 zeigt ein erstes Ausführungsbeispiel des Kommunikationssystems. Dieses weist einen Bus auf, der eine Taktleitung CLK und eine Befehls- und Datenleitung C/D hat. Darüber hinaus notwendige Leitungen zur Übertragung von Versorgungspotentialen sind nicht dargestellt. An die Taktleitung CLK und die Befehls- und Datenleitung C/D sind zwei Sklavenstationen S und eine Meisterstation M angeschlossen, wobei die Meisterstation M zur Steuerung der Sklavenstationen S dient.

Figur 2 zeigt den Aufbau der Meisterstation M aus Figur 1. Sie weist ein mit der Taktleitung CLK verbindbares Takterzeugungsmittel CLKG auf, das einen gemeinsamen Arbeitstakt für die Meisterstation M und die Sklavenstationen S erzeugt. Der Arbeitstakt ermöglicht einen synchronen Betrieb der Stationen M, S.

Außerdem weist die Meisterstation M weitere Elemente CTRM auf, die über eine Ausgangsschaltung OUTM und eine Eingangsschaltung INM mit der Befehls- und Datenleitung C/D verbunden sind. Die Ausgangsschaltung OUTM dient der Ausgabe von Befehlen und von in den Sklavenstationen zu speichernden Daten, während die Eingangsschaltung INM dem Empfang von Befehlsbestätigungen der Sklavenstationen S und von durch diese gesendeten Daten dient.

Die Meisterstation M weist ferner ein Adreßgenerierungsmittel ADRG auf, mittels dessen sie während eines Identifikationsprozesses, der noch zu erläutern ist, den Sklavenstationen S Adressen für eine spätere Adressierung zuordnen kann, die u.U. ebenfalls über die Ausgangsschaltung OUTM und die Befehls- und Datenleitung C/D zu diesen übertragbar sind, wie weiter unten noch beschrieben wird.

Die Befehls- und Datenleitung C/D ist über einen Widerstand R (in diesem Fall ein Pull-Up-Widerstand) mit einem ersten Potential VCC, welches ein Versorgungspotential der Meisterstation M sein kann, verbunden. Bei diesem Ausführungsbeispiel der Erfindung ist der Widerstand R innerhalb der Meisterstation M angeordnet. Er kann aber auch außerhalb dieser angeordnet sein. Der Widerstand R ist durch einen Schalter S deaktivierbar.

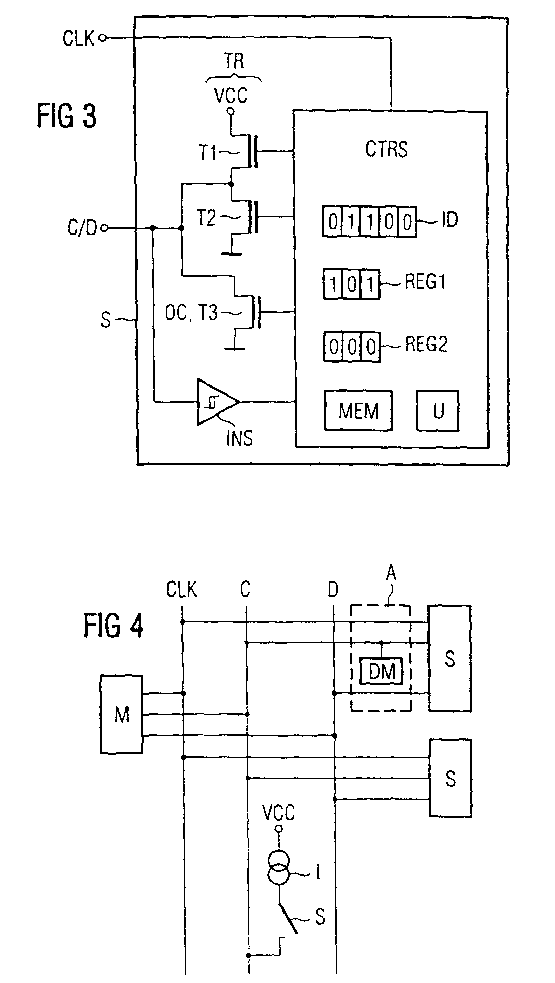

Jede der Sklavenstationen S des Kommunikationssystems in Figur 1 ist gemäß Figur 3 aufgebaut. Jede Sklavenstation S ist über eine erste Ausgangsschaltung OC (eine Open-Drain-Ausgangsschaltung) und eine zweite Ausgangsschaltung TR (eine Tristate-Ausgangsschaltung für einen Push-Pull-Betrieb), die ausgangsseitig miteinander verbunden sind, mit der Befehls- und Datenleitung C/D verbunden. Die zweite Ausgangsschaltung TR weist einen ersten Transistor T1 und einen zweiten Transistor T2 auf. Die erste Ausgangsschaltung OC weist einen dritten Transistor T3 auf. Die erste Ausgangsschaltung OC kann natürlich auch als Open-Collector-Ausgang mit einem Bipolar-Transistor realisiert sein.

Die Sklavenstation S in Figur 3 weist Komponenten CTRS auf, denen der von der Meisterstation M erzeugte Arbeitstakt über die Taktleitung CLK zuführbar ist. Über eine Eingangsschaltung INS ist die Sklavenstation S mit der Befehls- und Datenleitung C/D verbunden. Die Eingangsschaltung INS dient dem Empfang einer der Sklavenstation S von der Meisterstation M zugeordneten Adresse, von Befehlen und von Daten, die von der Meisterstation M sendbar sind.

In der Sklavenstation S ist ein Identifikationscode ID gespeichert, der für alle an das Kommunikationssystem angeschlossenen Sklavenstationen S unterschiedlich ist. Der Identifikationscode ID ist bitweise über die erste Ausgangsschaltung OC an die Befehls- und Datenleitung C/D ausgebbar. Dies kann für alle Sklavenstationen S gleichzeitig, und zwar synchron zum Arbeitstakt CLK erfolgen.

Die Sklavenstation S weist außerdem ein beschreibbares Speichermittel REG1 (ein RAM) auf, in welchem eine von der Meisterstation M übertragene Adresse speicherbar ist. Ferner weist die Sklavenstation S ein Festwert-Speichermittel REG2 (ein ROM) auf, in dem eine für alle Sklavenstationen S gleiche Initialisierungs-Adresse permanent gespeichert ist. Desweiteren enthält die Sklavenstation S ein Überwachungsmittel U, mittels dessen bei Ausgabe des Identifikationscodes ID über die erste Ausgangsschaltung OC die einzelnen Bits des Identifikationscodes ID mit dem Potential der Befehls- und Datenleitung C/D vergleichbar sind. Die Sklavenstation S enthält auch einen Datenspeicher MEM, in dem über die Befehls- und Datenleitung C/D übermittelte Daten speicherbar sind, die über die zweite Ausgangsschaltung TR wieder ausgebbar sind. Der Datenspeicher MEM kann ein RAM oder ein ROM sein.

Im folgenden soll nun die Funktionsweise der zuvor anhand der Figuren 1 bis 3 beschriebenen Komponenten des Kommunikationssystems erläutert werden:

Das Kommunikationssystem und mit ihm die Sklavenstationen S sind durch die Meisterstation M in zwei verschiedene Betriebsarten versetzbar. Bei der ersten Betriebsart erfolgt eine Identifizierung der an das Kommunikationssystem angeschlossenen Sklavenstationen S durch die Meisterstation M, die den identifizierten Sklavenstationen S Adressen für eine spätere individuelle Adressierung zuweist. In der zweiten Betriebsart sind einzelne der Sklavenstationen S über diese Adressen durch die Meisterstation M adressierbar und es findet eine Übertragung der im Datenspeicher MEM gespeicherten bzw. zu speichernden Daten zwischen der adressierten Sklavenstation S und der Meisterstation M statt.

Während in der ersten Betriebsart die zweiten Ausgangsschaltungen OC aller Sklavenstationen S aktivierbar sind, ist in der zweiten Betriebsart nur jeweils die zweite Ausgangsschaltung TR der einzelnen, jeweils adressierten Sklavenstationen S aktivierbar.

Bei Inbetriebnahme des Kommunikationssystems werden zunächst sämtliche Sklavenstationen S in die erste Betriebsart versetzt. Auf einen Befehl der Meisterstation M, die alle Sklavenstationen S über die im Festwert-Speichermittel REG2 gespeicherte, für alle Sklavenstationen S gleiche Initialisierungsadresse adressiert, geben alle Sklavenstationen S gleichzeitig Bit für Bit ihrer Identifikationscodes über ihre erste Ausgangsschaltung OC an die zunächst auf das erste Potential VCC vorgeladene Befehls- und Datenleitung C/D.

Die ersten Ausgangsschaltungen OC haben bei Ausgabe eines Datums eines ersten logischen Zustands 0 einen hochohmigeren Zustand (dritter Transistor T3 gesperrt) als bei Ausgabe eines Datums eines zweiten logischen Zustands 1 (dritter Transistor T3 leitend). Da die Befehls- und Datenleitung C/D auf das erste Potential VCC vorgeladen ist, bleibt dieses erste Potential VCC auf der Leitung C/D erhalten, sofern an allen ersten Ausgangsschaltungen OC der erste logische Zustand 0 anliegt. Liegt dagegen bei nur einer der Sklavenstationen S an der ersten Ausgangsschaltung OC der zweite logische Zustand 1, wird das Potential der Leitung C/D über den entsprechenden dritten Transistor T3 auf Masse entladen, bis wieder nur Bits des ersten logischen Zustands 0 an den ersten Ausgangsschaltungen OC anliegen.

Während nun alle Sklavenstationen S ihre Identifikationscodes ID ausgeben, überwachen sie mittels ihrer Überwachungsmittel U das Potential der Leitung C/D. Diejenigen Sklavenstationen S, die Bits des ersten logischen Zustands 0 ausgeben, jedoch feststellen, daß die Leitung C/D trotzdem entladen wird, schalten sich inaktiv. Aktiv bleiben dann nur diejenigen Sklavenstationen S, die gerade ein Bit des zweiten logischen Zustands 1 ausgeben. Nach der Ausgabe aller Bits der Identifikationscodes ID ist folglich nur noch eine der Sklavenstationen S aktiv, da alle Identifikationscodes ID unterschiedlich sind.

Da die Anzahl der Bits der Identifikationscodes ID bekannt ist und die bitweise Ausgabe synchron zum Arbeitstakt CLK erfolgt, weiß die Meisterstation M, wann alle Bits ausgegeben sind und ordnet zu diesem Zeitpunkt mittels ihres Adreßgenerierungsmittels ADRG der letzten noch aktiven Sklavenstation S eine Adresse für eine spätere Adressierung zu. Für diese Adressenzuordnung gibt es zwei Möglichkeiten:
1. Die Meisterstation M generiert mittels ihres Adreßgenerierungsmittels ADRG eine individuelle Adresse und überträgt diese über die Befehls- und Datenleitung C/D zu der noch aktiven Sklavenstation S, wo sie in deren beschreibbaren Speichermittel REG1 gespeichert wird.
2. Alternativ dazu beobachtet die Meisterstation M während des soeben beschriebenen Identifikationsprozesses (Ausgabe der Identifikationscodes ID) das Potential auf der Leitung C/D und rekonstruiert daraus den Identifikationscode der zuletzt noch aktiven Sklavenstation S, den sie im Adreßgenerierungsmittel ADRG für eine spätere Adressierung der Sklavenstation S über diesen Identifikationscode ID speichert. Die der Sklavenstation S zugeordnete Adresse ist dann gleich ihrem durch die Meisterstation M ermittelten Identifikationscode ID. Der Vorteil dieser Variante besteht darin, daß in den Sklavenstationen S kein beschreibbares Speichermittel REG 1 benötigt wird und keine Übertragung einer ihnen neu zugeordneten Adresse stattfinden muß.

Die erstgenannte Alternative bietet den großen Vorteil, daß der Sklavenstation S eine neue Adresse zuordbar ist, die wesentlich weniger Bits aufweist als ihr Identifikationscode ID. Außerdem muß die Meisterstation M keine Mittel zum Erkennen der durch die Sklavenstationen S ausgegebenen Identifikationscodes ID aufweisen. Da alle Identifikationscodes ID verschieden sein sollen und sie beispielsweise während des Herstellprozesses der Sklavenstationen S im Festwert-Speichermittel REG2 gespeichert werden, während der spätere Einsatzort noch unbekannt ist, muß bei einer Vielzahl von gefertigten Sklavenstationen S eine große Anzahl von Bits der Identifikationscodes ID vorgesehen sein. In einem Kommunikationssystem wird es dagegen immer eine beschränkte Zahl von Teilnehmern geben, so daß eine individuelle Adressierung aller Sklavenstationen S bereits mit einer geringen Zahl von Bits möglich ist. Der Vorteil einer geringeren Zahl von Adreßbits liegt darin, daß die Adressierungsvorgänge, die durch Übertragen der Adreßbits von der Meisterstation M zu den Sklavenstationen S in der zweiten Betriebsart erfolgen, wesentlich verkürzt werden können. Es kann beispielsweise vorgesehen sein, daß die Identifikationscodes ID jeweils 128 Bits und die zugeordneten Adressen lediglich 32 Bits aufweisen.

Um mehr als eine der Sklavenstationen S identifizieren zu können und jeder von ihnen eine Adresse zuordnen zu können, wird das erläuterte Verfahren bezüglich der bisher noch nicht identifizierten Sklavenstationen S wiederholt, während die bereits identifizierten Sklavenstationen S deaktiviert bleiben. Auf diese Weise sind nach n Identifikationszyklen - bei denen jeweils die Identifikationscodes ID in der beschriebenen Weise bitweise ausgegeben werden - n Sklavenstationen S identifizierbar.

Dadurch, daß für die Durchführung der ersten Betriebsart - die Identifizierung der Sklavenstationen S durch die Meisterstation - die ersten Ausgangsschaltungen OC als Open-Drain-Ausgangsschaltungen vorgesehen sind, ergibt sich zwar in günstiger Weise die Möglichkeit der Parallelschaltung aller Sklavenstationen S, wie sie für die erfindungsgemäße Identifikation notwendig ist. Allerdings ist das Schaltverhalten derartiger Open-Drain-Ausgänge relativ langsam. Die Verwendung der zweiten Ausgangsschaltung TR als im Vergleich dazu schneller schaltbaren Tristate-Ausgang zur Durchführung der zweiten Betriebsart - der Datenübertragung von einer der Sklavenstationen S zur Meisterstation M - ermöglicht in vorteilhafter Weise eine viel höhere Datenrate als es bei Nutzung der ersten Ausgangsschaltung OC auch in der zweiten Betriebsart möglich wäre.

Zur Einstellung der beiden unterschiedlichen Datenraten ist der durch den Taktgenerator CLKG der Meisterstation M generierte Takt auf der Taktleitung CLK auf zwei verschiedene Werte einstellbar, nämlich eine niedrigere Taktrate für die erste Betriebsart, bei der die ersten Ausgangsschaltungen OC angesteuert werden, und eine höhere Taktrate für die zweite Betriebsart, bei der die in den Datenspeichern MEM gespeicherten Daten über die entsprechenden zweiten Ausgangsschaltungen TR übertragbar sind.

Die Befehls- und Datenleitung C/D in Figur 1 dient
- in der ersten Betriebsart (Identifikation) der Übermittlung des Identifikationsbefehls der Meisterstation M zu allen über die in den Festwert-Speichermitteln REG2 gespeicherte Initialisierungsadresse adressierten Sklavenstationen S, der Ausgabe der Identifikationscodes ID der Sklavenstationen S über die ersten Ausgangsschaltungen OC und gegebenenfalls der Übertragung der zugeordneten Adressen von der Meisterstation M zur jeweiligen Sklavenstation S,
- in der zweiten Betriebsart (Datenübertragung) der Übermittlung von Befehlen der Meisterstation M mittels der im beschreibbaren Speichermittel REG1 gespeicherten, neu zugeordneten Adressen an einzelne der Sklavenstationen S, der Übertragung von Daten, die in den adressierten Sklavenstationen S speicherbar bzw. gespeichert sind, zwischen der Meisterstation M und der jeweils adressierten Sklavenstation S sowie der Übermittlung eventuell vorgesehener Befehlsbestätigungen durch die Sklavenstationen S als Antwort auf Befehle der Meisterstation M.

Durch Verwendung der zweiten Ausgangsschaltungen TR in der zweiten Betriebsart kann die Datenübertragung sowie die Bestätigung der Befehle mit einer höheren Datenrate erfolgen, als wenn auch hierfür die ersten Ausgangsschaltungen OC verwendet würden. Dies folgt aus der höheren erreichbaren Datenrate für Tristate-Ausgangsschaltungen gegenüber Open-Drain-Ausgangsschaltungen. Erreicht wird diese, indem der Arbeitstakt auf der Taktleitung CLK in der zweiten Betriebsart gegenüber der ersten Betriebsart erhöht wird.

Besonders vorteilhaft ist, daß der Widerstand R zur Vorladung der Leitung C/D (siehe Figur 2) über den Schalter S in der zweiten Betriebsart deaktivierbar ist. Der Schalter S ist nur in der ersten Betriebsart geschlossen, da die Vorladung nur für den parallelen Betrieb der ersten Ausgangsschaltungen OC notwendig ist. Dagegen sind die zweiten Ausgangsschaltungen TR mit maximaler Datenrate betreibbar, wenn der Schalter S in der zweiten Betriebsart geöffnet ist.

Figur 4 zeigt ein zweites Ausführungsbeispiel des erfindungsgemäßen Kommunikationssystems. Dieses weist einen Bus aus drei Leitungen auf: die Taktleitung CLK sowie eine Befehlsleitung C und eine Datenleitung D, die statt der Befehls- und Datenleitung C/D aus der Figur 1 vorgesehen sind. Über die Datenleitung D erfolgt die Übertragung von im Datenspeicher MEM der Sklavenstationen S gespeicherten Daten, während über die Befehlsleitung C die Befehle und Befehlsbestätigungen zwischen Meisterstation M und den Sklavenstationen S ausgetauscht werden. Außerdem erfolgt die erfindungsgemäße Identifikation über die Befehlsleitung C.

Die Befehlsleitung C ist über eine durch einen Schalter S deaktivierbare Stromquelle I auf das erste Potential VCC vorladbar, die z.B. durch einen Transistor realisiert sein kann. Mit einer solchen Stromquelle I läßt sich der Entladevorgang der Befehlsleitung C in der ersten Betriebsart (Identifikation) schneller gestalten, als bei Verwendung eines Widerstandes R, wie er in Figur 1 dargestellt ist. Die Stromquelle I kann natürlich auch Bestandteil der Meisterstation M sein. Durch die Deaktivierbarkeit der Stromquelle I ergibt sich, wie bezüglich des Widerstandes R in Figur 2 beschrieben, eine Verringerung der Umladezeiten der Leitung C in der zweiten Betriebsart (Einsatz der zweiten Ausgangsschaltungen TR), so daß die mit den zweiten Ausgangsschaltungen TR erreichbare maximale Datenrate weiter erhöht wird.

Die Meisterstation M in Figur 4 kann ähnlich derjenigen in Figur 2 gestaltet sein, wobei natürlich getrennte Anschlüsse für die Datenleitung D und die Befehlsleitung C vorzusehen sind. Die Übermittlung der zugeordneten Adressen zu den Sklavenstationen S erfolgt über die Befehlsleitung C.

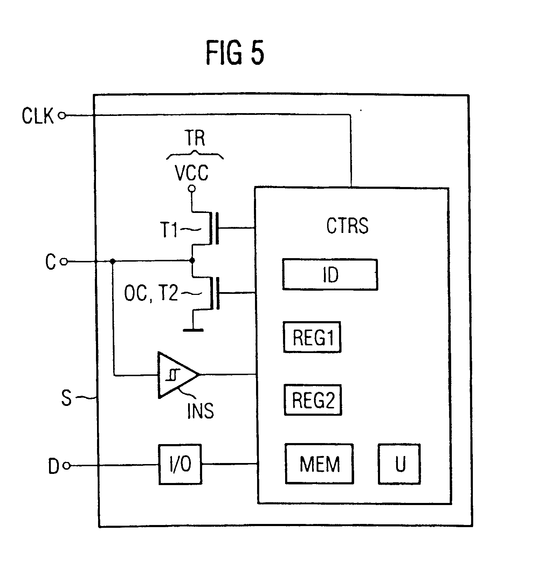

Figur 5 zeigt eine der Sklavenstationen S aus Figur 4, die sich vom in Figur 3 dargestellten Ausführungsbeispiel nur hinsichtlich folgender Punkte unterscheidet:

Es gibt zum Anschluß an die Datenleitung D eine Ein- und Ausgangsschaltung I/O, über die Daten in den Datenspeicher MEM einlesbar oder aus diesem auslesbar sind. Sinnvollerweise kann die Ein- und Ausgangsschaltung I/O ebenfalls einen Tristate-Ausgang zur Gewährleistung einer hohen Datenrate aufweisen.

Die ersten OC und zweiten TR Ausgangsschaltungen der Sklavenstationen S sind - wie beim Ausführungsbeispiel nach Figur 3 - wieder Open-Drain- bzw. Tristate-Ausgangschaltungen und ausgangsseitig mit der Befehlsleitung C verbunden. Die erste Ausgangsschaltung OC ist bei diesem Ausführungsbeispiel Teil der zweiten Ausgangsschaltung TR, die durch den ersten Transistor T1 und den zweiten Transistor T2 gebildet ist. Die erste Ausgangsschaltung OC ist durch den zweiten Transistor T2 der zweiten Ausgangsschaltung TR gebildet. Die zweite Ausgangsschaltung TR ist über die Gates der beiden Transistoren T1, T2 steuerbar und kann auf diese Weise einen der beiden logischen Zustände 0, 1 an ihren Ausgang geben oder diesen hochohmig schalten. Dagegen ist die erste Ausgangsschaltung über das Gate des zweiten Transistors T2 steuerbar, sofern das Steuersignal des ersten Transistors T1 deaktiviert bleibt, so daß dieser sperrt.

Beim in Figur 4 dargestellten Kommunikationssystem dient die Befehlsleitung C ausschließlich der Übermittlung von Befehlen der Meisterstation M zu den Sklavenstationen S und von Befehlsbestätigungen in umgekehrter Richtung. Durch das erfindungsgemäße Umschalten vom Betrieb der ersten Ausgangsschaltungen OC in der ersten Betriebsart (Identifikation) zum Betrieb der zweiten Ausgangsschaltungen TR in der zweiten Betriebsart (Datenübertragung), kann in der zweiten Betriebsart eine Bestätigung der von den Sklavenstationen S empfangenen Befehle mit einer hohen Datenrate erfolgen. Grund hierfür ist, wie bereits erwähnt, die höhere erreichbare Schaltgeschwindigkeit von Tristate-Ausgangsschaltungen gegenüber Open-Drain/Collector-Ausgangsschaltungen. Da der Betrieb des Kommunikationssystems und damit auch der Sklavenstationen S synchron zum Arbeitstakt CLK erfolgt, wird die Datenrate aller Ausgangsschaltungen OC, TR, I/O ebenfalls durch den Takt CLK bestimmt.

Insgesamt ergibt sich bei dieser Ausführungsform der Erfindung, wie auch beim Ausführungsbeispiel nach Figur 1, eine hohe Datenrate für den Betrieb in der zweiten Betriebsart, da in der zweiten Betriebsart eine höhere Rate des Taktes auf der Taktleitung CLK vorgesehen ist, als in der ersten Betriebsart. Der Takt CLK dient in Figur 1 nämlich der Synchronisierung des Betriebes der Befehls- und Datenleitung C/D und in Figur 4 sowohl der Synchronisierung des Betriebes der Befehlsleitung C als auch der Datenleitung D.

Da die Identifikation in der ersten Betriebsart grundsätzlich nur relativ wenig Zeit in Anspruch nimmt, befindet sich das Kommunikationssystem fast immer in der zweiten Betriebsart und kann von der höheren Taktrate profitieren, die der Einsatz von Tristate-Ausgangsschaltungen sowohl als zweite Ausgangsschaltungen TR als auch innerhalb der Ein- und Ausgangsschaltung I/O (beim Ausführungsbeispiel in Figur 5) ermöglicht.

Figur 4 zeigt zusätzlich exemplarisch für die im oberen Bereich dargestellte Sklavenstation S, daß diese über eine Anschlußeinrichtung A mit den Leitungen CLK, C, D des Kommunikationssystems verbunden ist. Die Anschlußeinrichtung A kann beispielsweise ein Steckplatz für die Sklavenstation S sein. Es ist dann möglich, daß das System eine Reihe von solchen Anschlußeinrichtungen A aufweist, von denen bei Betrieb des Systems nicht alle mit Sklavenstationen S verbunden sein müssen. Die Anschlußeinrichtung A in Figur 4 weist ein Detektiermittel DM auf, die dazu dient, das Anschließen der Sklavenstation S an die Anschlußeinrichtung A festzustellen. Diese Detektion kann beispielsweise mittels eines mechanischen oder elektrischen Schalters realisiert werden, der bei Anschließen der Sklavenstation S an die Anschlußeinrichtung A betätigt wird. Das Detektiermittel DM übermittelt, nachdem es den Anschluß einer Sklavenstation S festgestellt hat, ein entsprechendes Ergebnissignal an die Meisterstation M. Beim gezeigten Ausführungsbeispiel wird dieses Ergebnissignal über die Befehlsleitung C übertragen.

Das beschriebene Detektiermittel DM ermöglicht es, der Meisterstation M mitzuteilen, wenn neue Sklavenstationen S, die bisher noch nicht identifiziert und mit einer Adresse versehen worden sind, an das Kommunikationssystem angeschlossen werden. Dies ist besonders günstig, wenn während des Betriebes des Kommuniktionssystems sich die Anzahl der angeschlossenen Sklavenstationen S durch hinzufügen weiterer Sklavenstationen S erhöht. Es kann dann durch die Meisterstation M eine Deaktivierung der bereits zuvor identifizierten Sklavenstationen S erfolgen, woraufhin die eine oder mehreren neu hinzugekommenen Sklavenstationen S, denen bisher noch keine Adresse von der Meisterstation M zugeordnet worden ist, in der bereits beschriebenen Weise identifiziert werden.

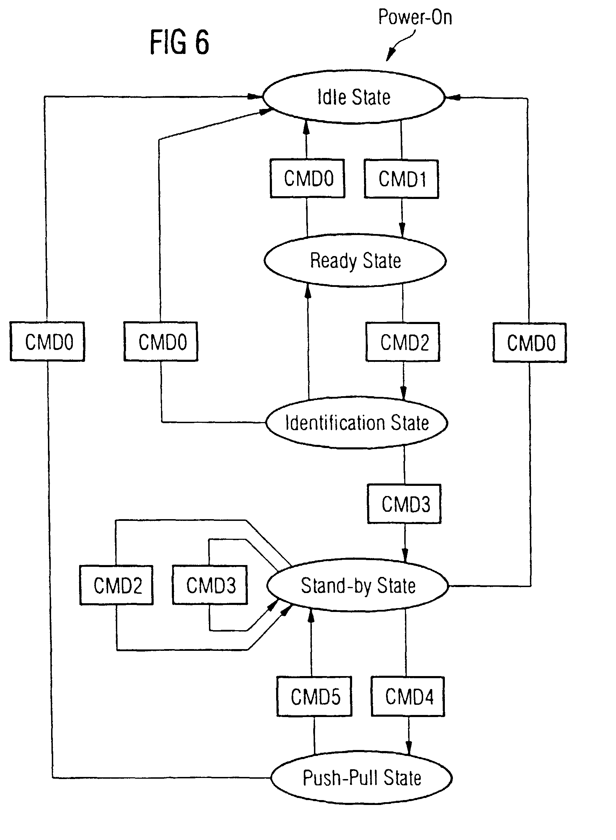

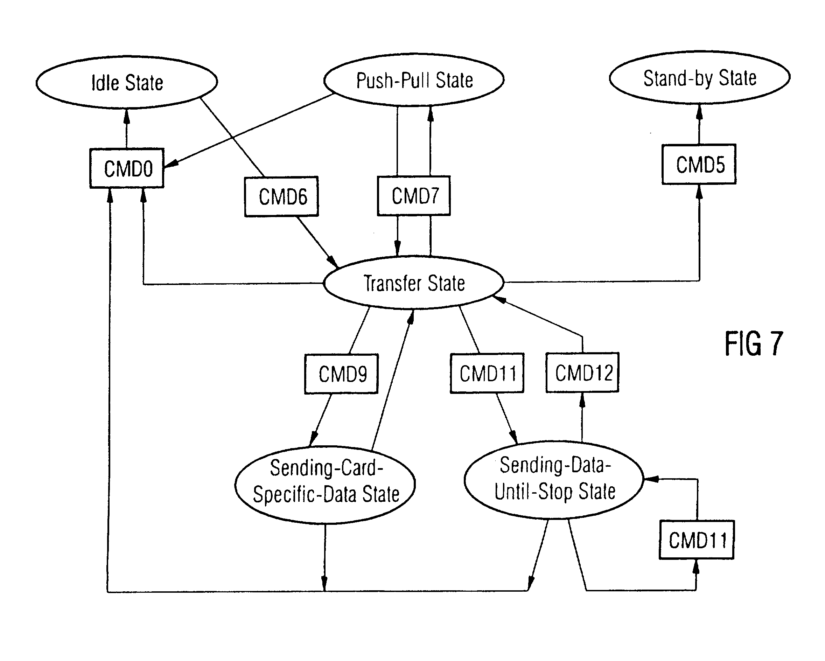

Anhand der Figuren 6 und 7 wird nun anhand eines Ausführungsbeispieles erklärt, in welcher Weise die in den Figuren 1 und 4 gezeigten Kommunikationssysteme vorteilhaft betrieben werden können:

Ganz oben in Figur 6 ist dargestellt, daß bei Inbetriebnahme des Kommunikationssystems, also bei Anlegen der Versorgungsspannung (Power-on), alle Sklavenstationen S sich zunächst in einem Ruhezustand (idle state) befinden. In diesem Ruhezustand sind alle Sklavenstationen S jederzeit durch einen Reset-Befehl CMD0 der Meisterstation M während des Betriebes des Kommunikationssystems versetzbar.

Bei der Inbetriebnahme des Kommunikationssystems sind die Sklavenstationen S über die im Festwert-Speichermittel REG2 gespeicherte, für alle Sklavenstationen S gleiche Adresse durch die Meisterstation M adressierbar. Mittels eines ersten Befehls CMD1 versetzt die Meisterstation M die Skavenstationen S in einen Fertigzustand (ready state) bei dem die Open-Drain-Ausgangsschaltungen OC betriebsbereit sind.

Mittels eines zweiten Befehls CMD2 der Meisterstation M (dem Identifikationsbefehl) sind die Sklavenstationen S dann in einen Identifikationszustand (identification state) versetzbar, der der oben beschriebenen ersten Betriebsart entspricht. In diesem Identifikationszustand erfolgt die bitweise Ausgabe der Identifikationscodes ID über die ersten Ausgangsschaltungen OC.

Derjenigen Sklavenstation S, die sich bei der Identifikation durchsetzen konnte, wird durch einen dritten Befehl CMD3 eine zugeordnete Adresse übermittelt und sie wird anschließend in einen Bereitschaftszustand (stand-by state) versetzt. In diesem Bereitschaftszustand reagiert sie nicht mehr auf die Befehle CMD2 und CMD3.

Die noch nicht identifizierten Sklavenstationen S befinden sich nach Durchführung dieses einen Identifikationszyklus wieder im Fertigzustand, woraufhin durch den zweiten Befehl CMD2 die Identifikation der nächsten Sklavenstation S eingeleitet wird.

Sind alle Sklavenstationen S identifiziert, sind sie vom Bereitschaftszustand durch einen vierten Befehl CMD4 in einen Zustand versetzbar (push-pull state), bei dem die Open-Drain-Ausgangsschaltungen OC außer Betrieb gesetzt und die Tristate-Ausgangsschaltungen TR betriebsbereit gehalten werden.

Wird eine zusätzliche Sklavenstation S an das Kommunikationssystem angeschlossen, kann dies, wie bezüglich der Figur 4 erläutert wurde, mittels des Detektiermittels DM der Meisterstation M mitgeteilt werden. Diese kann mittels eines fünften Befehls CMD5 die im Push-Pull-Zustand befindlichen Sklavenstationen S, die ja bereits identifiziert worden sind, wieder zurück in den Bereitschaftszustand (stand-by state) versetzen. Die wenigstens eine Sklavenstation S, welche neu an das System angeschlossen worden ist, befindet sich durch die erstmalige Versorgung mit der Versorgungsspannung im Ruhe-Zustand (idle state). Für diese Sklavenstation(en) S kann über die Befehle CMD1, CMD2 und CMD3 die bereits beschriebene Identifikations-Prozedur durchgeführt werden.

In Figur 7 sind die bereits erläuterten Zustände Ruhe-Zustand (idle state), Push-Pull-Zustand und Bereitschaftszustand (stand-by state) der Sklavenstationen S dargestellt. Es werden nun die weiteren Betriebszustände des Kommunikationssystems erläutert.

Ausgehend vom Push-Pull-Zustand kann jeweils eine der Sklavenstationen S über die im Identifikationszustand mittels des dritten Befehls CMD3 ihr durch die Meisterstation M zugeordnete individuelle Adresse in einen Übertragungszustand (transfer state) versetzt werden. Zu diesem Zeitpunkt ist zwischen dieser Sklavenstation S und der Meisterstation M eine Punkt-zu-Punkt-Verbindung aufgebaut. In diesem Übertragungszustand bestätigt (quittiert) die Sklavenstation S jeden Befehl der Meisterstation M. Über einen neunten Befehl CMD9 wird sie von der Meisterstation M aufgefordert, in ihr gespeicherte spezifische Daten an die Meisterstation M zu übertragen. Die spezifischen Daten können beispielsweise die Kapazität des Datenspeichers MEM, die Art des zu verwendenden Fehlerkorrekturcodes für die im Datenspeicher MEM gespeicherten Daten sowie die maximal mögliche Taktrate für den Arbeitstakt, die für den Betrieb der Sklavenschaltung S zulässig ist, betreffen.

Mittels eines elften Befehls CMD11 kann die Meisterstation M die im Übertragungszustand befindliche, adressierte Sklavenstation S dazu auffordern, im Datenspeicher MEM gespeicherte Daten über die Befehls- und Datenleitung C/D (Figur 1) bzw. die Datenleitung D (Figur 4) an sie zu übertragen. Mit dem elften Befehl CMD11 wird eine Startadresse innerhalb des Datenspeichers MEM an die Sklavenstation S übertragen, von der an Daten ausgelesen werden sollen. Die Datenübertragung findet so lange statt, bis die Sklavenstation S einen Stoppbefehl CMD12 erhält oder erneut den elften Befehl CMD11, der ihr eine neue Startadresse zum Auslesen von Daten aus dem Datenspeicher MEM mitteilt.

Der fünfte Befehl CMD5 dient nicht nur, wie anhand der Figur 6 erläutert, dem Versetzen von im Push-Pull-Zustand befindlichen Sklavenstationen S in den Bereitschaftszustand (stand-by state), sondern auch dem Versetzen einer möglicherweise im Übertragungszustand (transfer state) befindlichen Sklavenstation S in den Bereitschaftszustand, wie dies in Figur 7 gezeigt ist.

Weiterhin ist bei dem in den Figuren 6 und 7 dargestellten Ausführungsbeispiel in vorteilhafter Weise vorgesehen, sofern lediglich eine Sklavenstation S an das Kommunikationssystem anschließbar oder angeschlossen ist, diese mittels eines sechsten Befehls CMD6 unmittelbar vom Ruhe-Zustand (idle state) in den Übertragungszustand (transfer state) zu versetzen. Diese einzelne Sklavenstation S ist über die permanent im Festwert-Speichermittel REG2 gespeicherte Adresse durch die Meisterstation M adressierbar, ohne daß über die Befehle CMD1, CMD2 und CMD3 eine Identifikation der Sklavenstation S unter Zuweisung einer neuen Adresse erfolgen muß. Bei einem derartigen Kommunikationssystem, wo nur eine Sklavenstation S vorhanden ist, wird auf diese Weise auf den Betrieb in der ersten Betriebsart, bei der die ersten Ausgangsschaltungen OC aktiviert werden, verzichtet und die Sklavenstation S ausschließlich in der zweiten Betriebsart (entsprechend dem Übertragungszustand transfer state) betrieben. In vorteilhafter Weise ergibt sich so eine große Zeitersparnis in der Ansteuerung der einzelnen Sklavenstationen S.

Die Sklavenstationen S können z.B. kartenförmige Datenträger sein und die Meisterstation M ein entsprechendes Schreib-/ Lese- bzw. Abspielgerät.

## Patentansprüche

1. Kommunikationssystem, das mindestens eine Sklavenstation (S) und eine Meisterstation (M) zu deren Steuerung aufweist, mit folgenden Merkmalen:
- in jeder Sklavenstation (S) ist ein Identifikationscode (ID) gespeichert, der Bits aufweist, wovon jedes einen von zwei logischen Zuständen (0, 1) hat,
- jede der Sklavenstationen (S) weist eine erste Ausgangsschaltung (OC) auf,
- die ersten Ausgangsschaltungen (OC) sind ausgangsseitig an eine Leitung (C; C/D) angeschlossen,
- die Identifikationscodes (ID) sind gleichzeitig bitweise an die ersten Ausgangsschaltungen (OC) legbar,
- liegen dabei gleichzeitig an allen ersten Ausgangsschaltungen (OC) Bits des ersten logischen Zustands (0) an, nimmt die Leitung (C; C/D) ein erstes Potential (VCC) an,
- liegt dabei dagegen an einer der ersten Ausgangsschaltungen (OC) ein Bit des zweiten logischen Zustands (1) an, nimmt die Leitung (C; C/D) ein zweites Potential (Masse) an,
- jede Sklavenstation (S) weist ein Überwachungsmittel (U) auf zur Überwachung, ob das jeweils ausgelesene Bit ihres Identifikationscodes (ID) im Falle, daß die Leitung (C; C/D) das zweite Pctential (Masse) annimmt, den zweiten logischen Zustand (1) hat, und zur Deaktivierung der Sklavenstation (S), falls dies nicht der Fall ist,
- die Meisterstation (M) weist ein Überwachungsmittel zum Überwachen des Potentials der Leitung (C; C/D) während der Ausgabe der Identifikationscodes (ID) auf, wodurch sie den Identifikationscode der letzten aktiven Sklavenstation (S) registriert,
- die Meisterstation (M) weist einen Speicher auf zum Speichern dieses Identifikationscodes (ID), so daß die entsprechende Sklavenstation (S) anschließend durch die Meisterstation (M) über inren in der Meisterstation gespeicherten Identifikationscode (ID) adressierbar ist.

2. Meisterstation zur Steuerung des Betriebes mindestens einer Sklavenstation (S) in einem Kommunikationssystem, die ein Adreßgenerierungsmittel (ADRG) aufweist, mittels dessen den Sklavenstationen (S) Adressen (ADR) zuordenbar sind,
- mittels des Adreßgenerierungsmittels (ADRG) ist das Potential auf einer die Meisterstation (M) mit den Sklavenstationen (S) verbindenden Leitung (C; C/D) ermittelbar,
- im Adreßgenerierungsmittel (ADRG) sind zeitlich aufeinanderfolgende Potentialzustände der Leitung (C; C/D) als jeweils eine der Adressen speicherbar.

## Claims

1. Communications system which has at least one slave station (S) and one master station (M) to control it, with the following features:
- stored in each slave station (S) is an identification code (ID) which has bits, each of which has one of two logic states (0, 1),
- each of the slave stations (S) has a first output circuit (OC),
- the first output circuits (OC) are connected on the output side to a line (C; C/D),
- the identification codes (ID) can be applied simultaneously bit by bit to the first output circuits (OC),
- if bits of the first logic state (0) are present simultaneously at all the output circuits (OC), the line (C; C/D) assumes a first potential (VCC),
- if, on the other hand, a bit of the second logic state (1) is present at one of the first output circuits (OC), the line (C; C/D) assumes a second potential (earth),
- each slave station (S) has a monitoring means (U) for monitoring if the read-out bit of its identification code (ID) has the second logic state (1) in the event that the line (C; C/D) assumes the second potential (earth), and for deactivating tne slave station (S) if this is not the case,
- the master station (M) has a monitoring means for monitoring the potential of the line (C; C/D) while the identification codes (ID) are being output and, in this way, it registers the identification code of the last active slave station (S),
- the master station (M) has a memory for storing this identification code (ID), so that the corresponding slave station (S) can subsequently be addressed by the master station (M) by means of its identification code (ID) stored in the master station.

2. Master station for controlling the operation of at least one slave station (S) in a communications system, which master station (S) has an address-generating means (ADRG) by means of which addresses (ADR) can be assigned to the slave stations (S),
- the potential on a line (C; C/D) which connects the master station (M) to the slave stations (S) can be determined by means of the address-generating means (ADRG),
- chronologically successive potential states of the line (C; C/D) can be stored as in each case one of the addresses in the address-generating means (ADRG).

## Revendications

1. Système de communication qui comprend au moins une station asservie (S) et une station maîtresse (M) pour sa commande, et qui possède les caractéristiques suivantes :
- dans chaque station asservie (S), est mémorisé un code d'identification (ID) qui comprend des bits dont chacun possède un de deux états logiques (0, 1),
- chacune des stations asservies (S) présente un premier circuit de sortie (OC),
- les premiers circuits de sortie (OC) sont connectés côté sortie à une ligne (C ; C/D),
- les codes d'identification (ID) peuvent être appliqués simultanément, bit par bit, aux premiers circuits de sortie (OC),
- lorsque des bits du premier état logique (0) sont présents simultanément sur tous les premiers circuits de sortie (OC), la ligne (C ; C/D) prend un premier potentiel (VCC),
- lorsque, au contraire, un bit du deuxième état logique (1) est présent sur un des premiers circuits de sortie (OC), la ligne (C ; C/D) prend un deuxième potentiel (masse) ;
- chaque station asservie (S) présente un moyen de surveillance (U) pour surveiller si le bit de son code d'identification (ID) qui est sélectionné, dans le cas où la ligne (C ; C/D) prend le deuxième potentiel (masse), a le deuxième état logique (1) et, pour désactiver la station asservie (S) si ce n'est pas le cas,
- la station maîtresse (M) présente un moyen de surveillance pour surveiller le potentiel de la ligne (C ; C/D) pendant l'émission du code d'identification (ID), de sorte qu'elle enregistre le code d'identification de la dernière station asservie active (S),
- la station maîtresse (M) comprend une mémoire pour mémoriser ce code d'identification (ID), de sorte que la station asservie (S) correspondante peut ensuite être adressée par la station maîtresse (M) au moyen de son code d'identification (ID) mémorisé dans la station maîtresse.

2. Station maîtresse pour la commande du travail d'au moins une station asservie (S) dans un système de communication, qui comprend un moyen de génération d'adresses (ADRG) à l'aide duquel des adresses (ADR) peuvent être attribuées aux stations asservies (S),
- le potentiel présent sur une ligne (C ; C/D) qui connecte la station maîtresse (M) aux stations asservies (S) peut être détecté à l'aide du moyen de génération d'adresses (ADRG),
- des états de potentiel de la ligne (C ; C/D) qui se succèdent dans le temps peuvent être mémorisés dans le moyen de génération d'adresses (ADRG) respectivement en qualité d'une des adresses.
